# FASCICULE DE BREVET EUROPEEN

(11) **EP 1 533 787 B1**
(45) Date de publication et mention de la délivrance du brevet: **09.05.2007**
(21) Numéro de dépôt: 04292559.4
(22) Date de dépôt: 28.10.2004
(51) Int. Cl.: G10K 11/16

(54) **Panneau insonorisant à billes et procédé de réalisation**
Kugelschalldämmendeplatte sowie Verfahren zur Herstellung
Sound insulation panel containing balls and method for producing it

(30) Priorité: 21.11.2003 FR 0313640
(43) Date de publication de la demande: 25.05.2005
(73) Titulaire: SNECMA, 75015 Paris (FR); Ateca Société Anonyme, 82000 Montauban (FR)
(72) Inventeur: Dravet, Alain, 13170 Les Pennes Mirabeau (FR); Riou, Georges, 77000 Melun (FR); Julliard, Jacques, 77850 Hericy sur Seine (FR); Delverdier, Osmin, 31380 Saint-Jean Lherm (FR); Vie, Philippe, 31000 Toulouse (FR)
(74) Mandataire: Boura, Olivier

(56) Documents cités:
- EP-A- 0 940 248
- FR-A- 2 660 787
- FR-A- 2 778 780
- US-A- 5 997 985
- DATABASE WPI Section Ch, Week 198801 Derwent Publications Ltd., London, GB; Class A88, AN 1988-004140 XP002287332 & JP 62 268864 A (MATSUYAMA K) 21 novembre 1987 (1987-11-21)

## Description

### Arrière-plan de l'invention

La présente invention se rapporte au domaine général des panneaux insonorisants dits « passifs » fonctionnant sur la base de résonateurs de Helmholtz.

Elle trouve une application avantageuse dans le secteur aéronautique, notamment au niveau des conduits d'une turbomachine soumis à des températures élevées.

Dans le domaine de l'aéronautique, des panneaux insonorisants sont utilisés pour réduire les émissions sonores émises par les turbomachines d'avion. Ces panneaux sont en général disposés directement en paroi d'écoulement afin d'atténuer l'énergie acoustique engendrée par les différents composants de la turbomachine.

La présente invention vise plus particulièrement à appliquer de tels panneaux insonorisants dans les conduits chauds de la turbomachine, par exemple en sortie de turbines ou encore au niveau de la tuyère d'échappement.

Dans ce contexte, il est donc nécessaire de réaliser des panneaux insonorisants qui résistent aux températures élevées de ces conduits et qui permettent de réduire les niveaux acoustiques sans pour autant pénaliser la résistance mécanique, la masse et l'encombrement de la turbomachine.

Un procédé connu pour réaliser des panneaux insonorisants est décrit dans le brevet FR 2 775 216. Ce document propose de réaliser des panneaux insonorisants par une structure prise en sandwich entre deux peaux et dont des alvéoles sont agencées en résonateurs de Helmholtz. Ces résonateurs de Helmholtz sont réalisés sous la forme de couches de billes creuses collées entre elles et aux parois de la structure par un liant de type résine.

Outre sa difficulté d'obtention, le panneau insonorisant décrit dans ce brevet présente encore certains inconvénients pour des applications à haute température.

En effet, ce panneau insonorisant présente une mauvaise tenue thermique lorsqu'il est soumis à des températures élevées et l'utilisation d'un liant entre les billes créé des problèmes de couplage galvanique entraînant des problèmes ponctuels de corrosion.

De plus, dans le cas d'un traitement présentant des cavités de grande dimension, le procédé divulgué s'adapte mal à la mise en oeuvre de panneaux insonorisants aux caractéristiques acoustiques évolutives. Par exemple, l'épaisseur des couches de billes peut difficilement varier dans une même alvéole de sorte que les caractéristiques acoustiques de cette alvéole restent sensiblement constantes.

### Objet et résumé de l'invention

La présente invention vise donc à pallier de tels inconvénients en proposant un panneau insonorisant résistant à des températures élevées, à performances acoustiques améliorées et qui peut présenter des caractéristiques acoustiques évolutives.

L'invention vise également un procédé de réalisation d'un tel panneau insonorisant.

Les objectifs sont atteints par le panneau tel que revendiqué à la revendication 1 et le procédé de réalisation tel que revendiqué à la revendication 8.

Le panneau insonorisant comporte une âme prise en sandwich entre une paroi pleine et une paroi poreuse, l'âme étant liée aux parois et comportant des cloisons s'étendant dans le sens de l'épaisseur entre les deux parois et formant des cellules qui comprennent chacune au moins une couche dissipatrice d'énergie sonore constituée par billes sphériques creuses à parois poreuses en contact mutuel.

Conformément à l'invention, les billes sont à parois micro-perforées et sont maintenues en position dans le sens de l'épaisseur entre les deux parois par des filets fixés sur les cloisons.

Les couches formées de billes sphériques creuses à parois poreuses et micro-perforées autorisent une forte dissipation de l'énergie sonore par effet viscothermique de l'air. Ceci peut se comprendre par le fait qu'il subsiste entre les billes d'une même couche des espaces constituant entre les deux filets une multitude de passages pour les molécules d'air. Ces passages qui forment un réseau interstitiel sont à l'origine de la dissipation d'énergie sonore par frottement de l'air en mouvement dans ce réseau (phénomène viscothermique).

L'utilisation de billes à parois poreuses et micro-perforées a pour avantage d'accroître nettement l'effet viscothermique de l'air par rapport à des billes non micro-perforées. En effet, la micro-perforation des parois des billes creuses permet de faire participer l'intérieur des billes au passage des molécules d'air au même titre que le réseau interstitiel.

La porosité globale d'une telle couche dissipatrice d'énergie sonore peut ainsi passer de 40% à 80% environ par rapport à une couche de billes non micro-perforées.

De la sorte, l'efficacité acoustique du panneau selon l'invention est augmentée à même encombrement par rapport à un panneau conventionnel ce qui se traduit par une bande d'absorption sonore plus large en terme de fréquences. De même, à performances acoustiques similaires, le panneau insonorisant selon l'invention peut permettre d'obtenir des gains en encombrement.

L'utilisation de filets métalliques pour le maintien des billes à la place d'un liant présente également de nombreux avantages. Notamment, cela simplifie la réalisation du panneau insonorisant et permet de faire varier localement ses caractéristiques acoustiques (épaisseur variable de la couche dans une même cellule, mélange de différents types de sphères...) et de les adapter à la demande, par exemple par secteur angulaire ou radial.

Il est avantageux d'utiliser des filets ayant la même composition que les cloisons sur lesquels ils sont fixés, ce qui permet d'éviter les problèmes de couplages hétérogènes responsables de corrosions. Il est également possible d'obtenir en une seule pièce un panneau insonorisant ayant une géométrie de révolution.

Les couches dissipatrices d'énergie sonore du panneau insonorisant peuvent être constituées par un mélange de billes de diamètres homogènes (à la tolérance de fabrication près) ou par un mélange de billes ayant des diamètres variant de 1 à 3,5 mm.

De plus, ces couches dissipatrices d'énergie sonore peuvent avoir une épaisseur constante ou variable dans une même cellule. Comme expliqué précédemment, ces caractéristiques avantageuses permettent de faire varier les caractéristiques acoustiques du panneau insonorisant.

Le procédé de réalisation d'un panneau insonorisant selon l'invention se caractérise en ce que :
- on réalise une âme comportant des cloisons formant des cellules ;
- pour chaque cellule de l'âme, on positionne et on fixe un filet inférieur sur les cloisons, on dispose sur le filet inférieur une épaisseur voulue de billes sphériques creuses à parois poreuses et micro-perforées, on positionne un filet supérieur en appliquant une légère pression sur les billes et on fixe le filet supérieur sur les cloisons ;
- on applique et on fixe l'une des faces de l'âme sur une paroi poreuse ; et
- on applique et on fixe l'autre face de l'âme sur une paroi pleine.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue partielle en perspective d'un panneau insonorisant selon un mode de réalisation de l'invention ;
- les figures 2A et 2B sont des vues en coupe dans le sens de l'épaisseur de panneaux insonorisants selon deux autres variantes de l'invention ;
- la figure 3 est un graphique illustrant le tracé des coefficients d'absorption pour un panneau insonorisant selon l'invention par rapport à un panneau insonorisant utilisant des billes non micro-perforées ;
- la figure 4 est un graphique montrant le tracé du coefficient d'absorption sonore pour un échantillon de billes micro-perforées et pour un échantillon de billes non micro-perforées ; et
- la figure 5 est un graphique illustrant l'impédance acoustique normalisée pour un échantillon de billes micro-perforées et pour un échantillon de billes non micro-perforées.

### Description détaillée d'un mode de réalisation

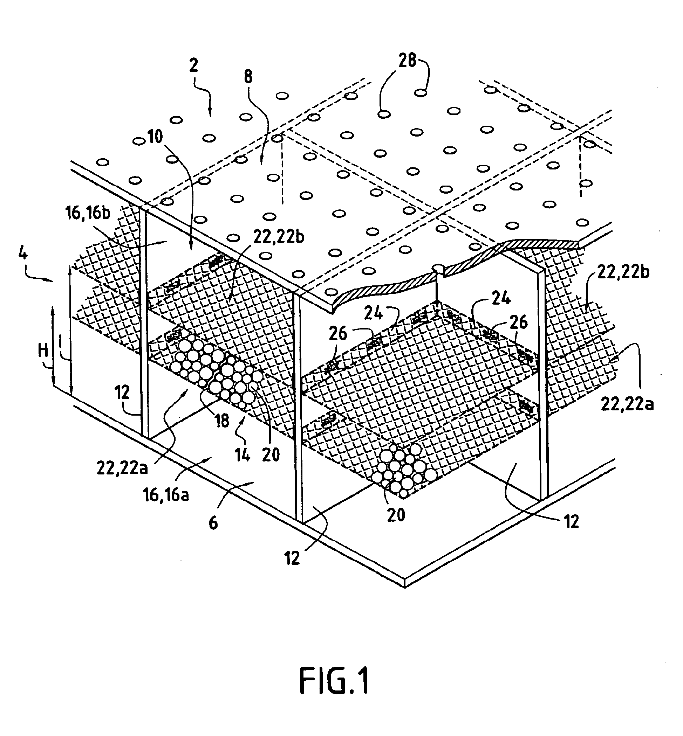

On se réfère d'abord à la figure 1 qui représente en perspective un panneau insonorisant selon un mode de réalisation de l'invention.

Le panneau insonorisant 2 est une structure comportant une âme 4 prise en sandwich entre une paroi (ou peau) pleine 6 et une paroi (ou peau) poreuse 8. L'âme 4 du panneau est constituée d'une pluralité de cellules 10 séparées par des cloisons 12 s'étendant dans le sens de l'épaisseur de l'âme et perpendiculairement aux parois 6, 8.

Les cellules peuvent avoir une section rectangulaire (comme représenté sur la figure 1), triangulaire ou hexagonale par exemple.

Les cloisons 12 sont fixées aux parois 6, 8, par exemple par soudure, de façon à former la structure du panneau insonorisant et à en assurer la rigidité et la résistance mécanique.

Chaque cellule 10 ainsi formée est divisée dans le sens de l'épaisseur de l'âme 4 par au moins une couche dissipatrice d'énergie sonore 14 dont les bords sont fixés aux cloisons 12.

Les couches dissipatrices 14 divisent chaque cellule en au moins deux cavités 16. Sur la figure 1 qui ne comporte qu'une seule couche dissipatrice 14 par cellule représentée, on désigne par 16a la cavité du fond, c'est à dire celle qui est contre la paroi pleine 6, et par 16b la cavité d'entrée, c'est à dire celle qui est contre la paroi poreuse 8. La couche dissipatrice 14 est traversée de part en part par une pluralité de passages 18 qui mettent en communication les cavités 16a, 16b en formant un réseau interstitiel.

La cavité d'entrée 16b est en communication avec l'extérieur du panneau insonorisant par l'intermédiaire de la paroi poreuse 8. De la sorte, l'énergie sonore qui provient de l'extérieur du panneau insonorisant 2 traverse la paroi poreuse 8 et met en résonance les cavités 16 couplées entre elles par les passages 18 formés dans les couches dissipatrices 14.

L'énergie sonore est ainsi principalement dissipée par effet viscothermique de l'air traversant les couches dissipatrices, et dans une moindre mesure dans la paroi poreuse 8.

Selon l'invention, chaque couche dissipatrice d'énergie sonore 14 est constituée de billes 20 sphériques creuses à parois poreuses et micro-perforées.

A l'intérieur des couches dissipatrices, ces billes 20 sont en contact mutuel et sont maintenues en position dans le sens de l'épaisseur entre les parois 6,8 par des filets ou treillis 22 rigides fixés contre les cloisons 12.

Ces filets 22, par exemple métalliques, permettent le positionnement et la tenue des billes sphériques 20 à l'intérieur de la couche dissipatrice 14. Ils doivent donc présenter un vide de maille relativement faible par rapport au diamètre des billes (par exemple de l'ordre de 0,2 mm pour des diamètres de billes variant de 1 à 3,5 mm). Aucun liant n'est ainsi nécessaire pour maintenir les billes en contact mutuel.

Les filets 22 sont fixés par leurs bords 24 aux cloisons 12 par soudure, brasure, rivetage ou toute autre technique équivalente. Sur la figure 1, des points de soudure 26 sont schématiquement représentés.

Afin d'éviter que les billes 20 ne se déplacent à l'intérieur de la couche dissipatrice, les filets 22 sont assemblés avec une légère pression (de l'ordre de 0,1 à 0,2 mbar). Bien qu'aucun déplacement important des billes ne soit autorisé, il subsiste cependant une liberté de « micro-déplacement » permettant d'amortir les vibrations subies par le panneau insonorisant.

De préférence, les filets 22 ont la même composition que les cloisons 12 sur lesquels ils sont fixés afin d'éviter les problèmes de couplages hétérogènes qui sont responsables de corrosions. Par exemple, les filets 22 et les cloisons 12 sont réalisés dans un même métal à base de nickel ou d'inox.

Selon une caractéristique avantageuse de l'invention, la paroi poreuse 8 présente des perforations 28 afin d'optimiser l'effet viscothermique de l'air qui la traverse.

A titre d'exemple, ces perforations 28 peuvent être des orifices circulaires ayant un diamètre variant de 0,5 à 2 mm et le taux de perforation de la paroi poreuse 8 peut être compris entre 10 et 30%.

Sur la figure 1, seule une couche dissipatrice 14 par cellule 10 est représentée. On peut aussi imaginer que chaque cellule comporte plusieurs couches dissipatrices sur toute l'épaisseur de l'âme 4 en fonction des caractéristiques acoustiques requises pour le panneau insonorisant.

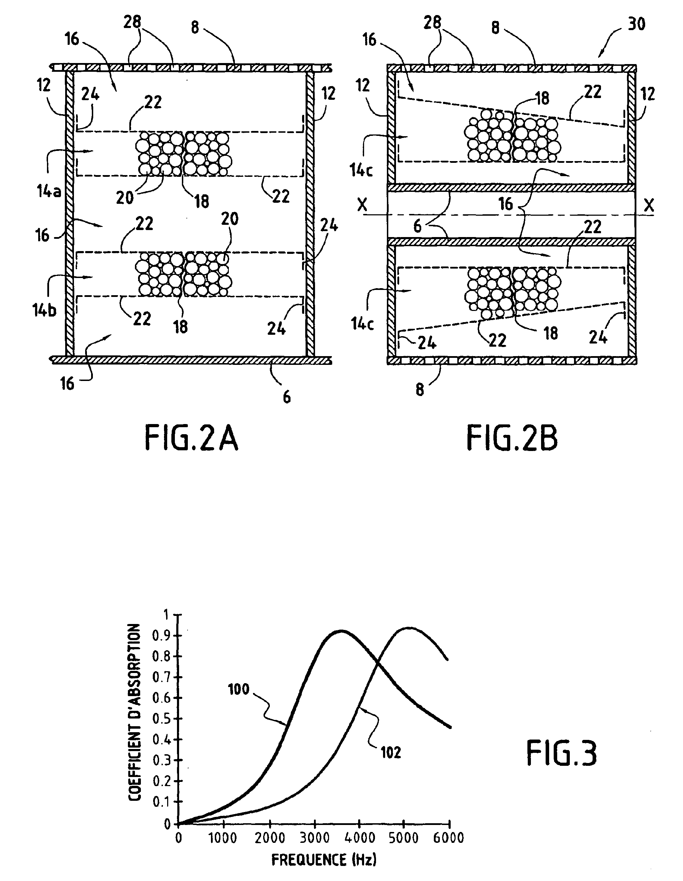

Ainsi, le panneau insonorisant illustré par la figure 2A comporte deux couches dissipatrices d'énergie sonore 14a et 14b aménagées dans une même cellule 10.

De même, toujours dans le but de faire varier les caractéristiques acoustiques du panneau insonorisant, les couches dissipatrices 14 peuvent être constituées par un mélange de billes 20 de diamètres homogènes ou de diamètres différents.

Selon une autre caractéristique avantageuse de l'invention, il est également possible de faire varier les caractéristiques acoustiques du panneau insonorisant en jouant sur l'épaisseur des couches dissipatrices 14 dans une même cellule 10. Cette possibilité est offerte en faisant varier l'écartement entre les filets 22.

En outre, la mise en forme des couches dissipatrices 14 permet avantageusement de réaliser en une seule pièce des panneaux insonorisants de révolution.

La figure 2B illustre bien ces deux avantages. Le panneau insonorisant représenté en coupe sur cette figure est une pièce 30 de révolution d'axe X-X réalisée en une seule pièce et présentant une couche dissipatrice 14c d'épaisseur variable tout autour de l'axe X-X.

On décrira maintenant la nature des billes 20 composant les couches dissipatrices d'énergie sonore 14.

Chaque couche dissipatrice 14 présente une impédance acoustique qui est directement liée aux caractéristiques acoustiques de la couche. Cette impédance dépend notamment du type de billes utilisées et de leur assemblage.

Les billes 20 des couches dissipatrices 14 sont sensiblement sphériques, creuses et à parois poreuses. Leur diamètre extérieur varie de préférence entre 0,5 et 5 mm avec une couche d'épaisseur de 0,3 mm environ.

Elles sont avantageusement réalisées en céramique (de type alumine) mais peuvent également être métalliques (poudre frittée) ou en zircone.

Selon l'invention, les billes 20 des couches dissipatrices 14 qui sont sensiblement sphériques, creuses et à parois poreuses, sont également micro-perforées.

La micro-perforation est une forme de porosité qui s'ajoute à la porosité intrinsèque des parois des billes. Elle est réalisée par perçage d'au moins deux trous qui traversent de part en part les parois des billes et se caractérise par des dimensions qui s'expriment en plusieurs centaines de microns (de l'ordre de 200 à 400 µm) par rapport aux pores dont les dimensions s'expriment typiquement en dizaines de microns (de l'ordre de 10 µm).

Ainsi, les dimensions des micro-perforations pratiquées dans les parois des billes 20 sont supérieures à celles des pores de ces mêmes parois d'au moins d'un ordre de 20 environ.

La forme et les dimensions des micro-perforations varie en fonction du procédé d'élaboration. Ainsi, elles peuvent être sensiblement cylindriques (avec un diamètre de l'ordre de 20 µm par exemple) ou parallélépipédiques (avec par exemple une largeur de l'ordre de 200 µm et une longueur de l'ordre de 500 µm).

La micro-perforation des parois des billes 20 améliore sensiblement les capacités d'absorptions sonores des couches dissipatrices 14. En effet, cette micro-perforation permet de faire participer l'intérieur des billes creuses au passage des molécules d'air au même titre que le réseau interstitiel formé entre les billes.

Le tableau ci-dessous et le tracé des coefficients d'absorption (figure 3) illustrent cette amélioration par rapport à des billes non micro-perforées.

Des essais ont été effectués avec une couche d'épaisseur constante de 10 mm et composées d'un assemblage en vrac de billes d'un même diamètre de 1,5 mm (à la tolérance de fabrication près). Les résultats sont les suivants :

| Caractéristiques | Résistance à l'écoulement (en Pa.s) | Tortuosité | Porosité (en %) |
|---|---|---|---|
| Billes non micro-perforées | 13600 | 3,36 | 40 |
| Billes micro-perforées | 15800 | 3,91 | 80 |

La résistance à l'écoulement, qui s'exprime comme le rapport entre la perte de charge et la vitesse d'écoulement de l'air au travers de la couche dissipatrice, représente la résistance acoustique. Cette résistance acoustique dépend de la porosité et de la tortuosité et sa valeur doit être optimisée afin d'obtenir le maximum de dissipation sonore.

La porosité dans la zone occupée par les billes représente le rapport entre volume ouvert et le volume total de la couche dissipatrice. Comme pour la tortuosité, la porosité doit donc être la plus élevée possible afin d'utiliser le maximum de volume disponible pour la dissipation d'énergie sonore, ce qui permet de fixer le calage en fréquences.

Il faut toutefois s'assurer que l'amortissement qui représente la résistance acoustique reste suffisant pour permettre la dissipation de l'énergie sonore.

Sur le tracé des coefficients d'absorption illustré par la figure 3, on remarque que l'intérêt de disposer des billes micro-perforées (courbe 100) permet, à encombrement identique, de réaliser un calage en fréquences nettement plus bas en fréquences qu'avec des billes non micro-perforées (courbe 102).

Un autre essai a permis de mettre en évidence les performances de dissipation d'énergie sonore obtenues par des billes micro-perforées selon l'invention par rapport à des billes non micro-perforées. Cet essai comparatif est réalisé dans les conditions suivantes :

1^{er} échantillon :
- Paroi poreuse ayant un taux de perforation de 22% avec des orifices de perforation de 1,5 mm de diamètre et une épaisseur de 0,7 mm.
- Assemblage en vrac sur une épaisseur de 28, 5 mm de billes sphériques creuses en céramique à parois poreuses et micro-perforées ayant des diamètres de 2 mm.

2^{nd} échantillon :
- Paroi poreuse ayant un taux de perforation de 22% avec des orifices de perforation de 1,5 mm de diamètre et une épaisseur de 0,7 mm.
- Assemblage en vrac sur une épaisseur de 28, 5 mm de billes sphériques creuses en céramique à parois poreuses et non micro-perforées ayant des diamètres de 2 mm.

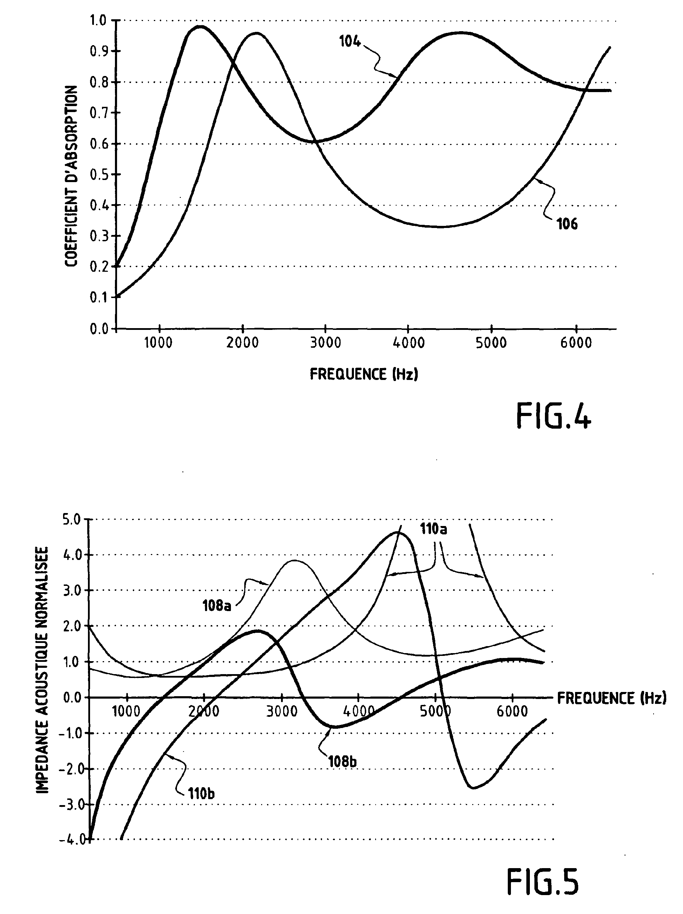

Ces deux échantillons sont soumis à un niveau d'excitation sonore de l'ordre de 140,5 dB. Les résultats de cet essai sont représentés par les figures 4 et 5 qui illustrent respectivement le tracé du coefficient d'absorption sonore et le tracé de l'impédance acoustique normalisée pour chacun de ces deux échantillons.

Sur la figure 4, la courbe 104 correspond au coefficient d'absorption du premier échantillon, tandis que la courbe 106 correspond au coefficient d'absorption du second échantillon.

De même, sur la figure 5, les courbes 108a et 108b représentent l'impédance acoustique normalisée du premier échantillon, respectivement en termes de résistance et de réactance, et les courbes 110a et 110b illustrent l'impédance acoustique normalisée du second échantillon, respectivement en termes de résistance et de réactance.

Sur la figure 4, on constate que les caractéristiques de la couche dissipatrice à billes micro-perforées du premier échantillon (courbe 104) permettent d'obtenir une configuration d'absorption fréquentielle à large bande.

En effet, pour ce premier échantillon, le coefficient d'absorption reste supérieur à 0,6 entre 1000 Hz et 6500 Hz. Par contre, les caractéristiques de la couche dissipatrice à billes non micro-perforées du second échantillon (courbe 106) montre une bande d'atténuation sonore moins large avec, en outre, un déficit d'absorption à basses fréquences.

Les courbes d'impédance normalisée en termes de résistance et de réactance de la figure 5 confirment que le calage en fréquences est plus large pour le premier échantillon (billes micro-perforées) que pour le second échantillon (billes non micro-perforées) et que la dissipation d'énergie sonore est plus importante pour le premier échantillon.

On décrira maintenant le procédé de réalisation d'un panneau insonorisant selon l'invention en se référant de nouveau à la figure 1.

Ce procédé consiste essentiellement à réaliser une âme 4, à appliquer et fixer l'une des faces de l'âme sur une paroi poreuse 8 et à appliquer et fixer l'autre face de l'âme sur une paroi pleine 6.

Selon l'invention, préalablement à l'application et à la fixation des faces de l'âme sur les parois 6, 8, il est prévu de découper deux filets 22 à la forme désirée.

On positionne et on fixe un filet inférieur (désigné par la référence 22a) sur les cloisons 12 de l'âme à une hauteur H par rapport à la paroi pleine 6. Les bords 24 du filet inférieur 22a sont fixés sur les cloisons 12 par exemple par soudure.

L'étape suivante consiste à déposer sur le filet inférieur une quantité de billes 20 définissant une épaisseur voulue (I-H) pour la couche dissipatrice 14, cette épaisseur pouvant être constante ou variable.

Un filet supérieur (désigné par la référence 22b) est alors positionné sur le « lit » de billes 20 avec une légère pression (par exemple de l'ordre de 0,1 à 0,2 mbar) afin d'éviter tout déplacement des billes dans la couche dissipatrice.

Les bords 24 du filet supérieur 22b sont fixés sur les cloisons 12 (par soudure par exemple). Ces opérations sont répétées pour chaque cellule 10 de l'âme 4.

L'âme 4 ainsi obtenue est ensuite placée entre les parois 6,8 puis fixée à celles-ci.

Le procédé de réalisation des panneaux insonorisants illustrés par les figures 2A et 2B est identique à celui-ci.

Le procédé de réalisation d'un panneau insonorisant tel que décrit précédemment présente de nombreux avantages par rapport à un procédé utilisant un liant pour le maintien des billes dans les couches dissipatrices.

En effet, la mise en oeuvre de ce procédé est grandement simplifié. Aucun liant de type résine n'est par ailleurs nécessaire, ce qui évite des problèmes de corrosion. L'outillage utilisé est également réduit.

Ce procédé permet ainsi de réaliser des panneaux insonorisants ayant des couches dissipatrices d'épaisseur variable.

## Revendications

1. Panneau insonorisant (2, 30) comportant une âme (4) prise en sandwich entre une paroi pleine (6) et une paroi poreuse (8), ladite âme étant liée auxdites parois et comportant des cloisons (12) s'étendant dans le sens de l'épaisseur entre les deux parois et formant des cellules (10) qui comprennent chacune au moins une couche dissipatrice d'énergie sonore (14), lesdites couches dissipatrices (14) étant constituées par des billes (20) sphériques creuses à parois poreuses en contact mutuel, **caractérisé en ce que** lesdites billes sont à parois micro-perforées et sont maintenues en position dans le sens de l'épaisseur entre les deux parois (6, 8) par des filets (22) fixés sur lesdites cloisons.

2. Panneau selon la revendication 1, **caractérisé en ce que** ladite paroi poreuse (8) présente des perforations (28) afin d'accroître l'effet viscothermique de l'air qui la traverse.

3. Panneau selon l'une des revendications 1 et 2, **caractérisé en ce que** les couches dissipatrices (14) sont constituées par un mélange de billes (20) de diamètres homogènes.

4. Panneau selon l'une des revendications 1 et 2, **caractérisé en ce que** les couches dissipatrices (14) sont constituées par un mélange de billes (20) ayant des diamètres variant de 1 à 3,5 mm.

5. Panneau selon l'une quelconque des revendications 1 à 4, **caractérisé en ce que** les couches dissipatrices d'énergie sonore (14) ont une épaisseur constante dans une même cellule (10).

6. Panneau selon l'une quelconque des revendications 1 à 4, **caractérisé en ce que** les couches dissipatrices d'énergie sonore (14) ont une épaisseur variable dans une même cellule (10).

7. Panneau selon l'une quelconque des revendications 1 à 6, **caractérisé en ce que** les filets (22) ont la même composition que les cloisons (12) sur lesquels ils sont fixés.

8. Procédé de réalisation d'un panneau insonorisant selon l'une quelconque des revendications 1 à 7, **caractérisé en ce que** :
- on réalise une âme (4) comportant des cloisons (12) formant des cellules (10);
- pour chaque cellule (10) de ladite âme (4), on positionne et on fixe un filet inférieur (22a) sur lesdites cloisons (12), on dispose sur ledit filet inférieur une épaisseur voulue de billes (20) sphériques creuses à parois poreuses et micro-perforées, on positionne un filet supérieur (22b) en appliquant une légère pression sur lesdites billes et on fixe ledit filet supérieur sur lesdites cloisons (12) ;
- on applique et on fixe l'une des faces de ladite âme (4) sur une paroi poreuse (8) ; et
- on applique et on fixe l'autre face de ladite âme sur une paroi pleine (6).

9. Procédé selon la revendication 8, **caractérisé en ce que** ladite paroi poreuse (8) présente des perforations (28) afin d'accroître l'effet viscothermique de l'air qui la traverse.

10. Procédé selon l'une des revendications 8 et 9, **caractérisé en ce que** lesdits filets supérieur et inférieur (22a, 22b) sont soudés sur lesdites cloisons (12) et lesdites faces de l'âme (4) sont soudées sur lesdites parois (6, 8).

## Claims

1. A soundproofing panel (2, 30) comprising a core (4) sandwiched between a solid wall (6) and a porous wall (8), said core being connected to said walls and including partitions (12) extending in the thickness direction between the two walls and forming cells (10), each cell containing at least one sound energy dissipating layer (14), said dissipating layers (14) being constituted by hollow spherical beads (20) with porous walls in mutual contact, the panel being **characterised in that** said beads have walls that are micro-perforated and that are held in position in the thickness direction between the two walls (6, 8) by nets (22) secured to said partitions.

2. A panel according to claim 1, **characterised in that** said porous wall (8) presents partitions (28) for increasing the viscothermal effect on the air passing therethrough.

3. A panel according to claim 1 or claim 2, **characterised in that** the dissipating layers (14) are constituted by a mixture of beads (20) of uniform diameter.

4. A panel according to claim 1 or claim 2, **characterised in that** the dissipating layers (14) are constituted by a mixture of beads (20) having diameters varying in the range 1 mm to 3.5 mm.

5. A panel according to any one of claims 1 to 4, **characterised in that** the sound energy dissipating layers (14) are of constant thickness within any one cell (10).

6. A panel according to any one of claims 1 to 4, **characterised in that** the sound energy dissipating layers (14) are of thickness that varies within a cell (10).

7. A panel according to any one of claims 1 to 6, **characterised in that** the nets (22) are of the same composition as the partitions (12) onto which they are secured.

8. A method of making a soundproofing panel according to any one of claims 1 to 7, **characterised by** the following steps:
- making a core (4) comprising partitions (12) that form cells (10);
- for each cell (10) of said core (4), positioning a lower net (22a) and securing it to said partitions (12), placing on said lower net a desired thickness of hollow spherical beads (20) having porous and micro-perforated walls, positioning an upper net (22b) while applying a small amount of pressure against said beads, and securing said upper net to said partitions (12);
- applying and securing one of the faces of said core (4) to a porous wall (8); and
- applying and securing the other face of said core to a solid wall (6).

9. A method according to claim 8, **characterised in that** said porous wall (8) presents partitions (28) to increase the viscothermal effect of the air passing therethrough.

10. A method according to claim 8 or claim 9, **characterised in that** said upper and lower nets (22a, 22b) are welded to said partitions (12), and said faces of the core (4) are welded to said walls (6, 8).

## Patentansprüche

1. Schalldämmende Platte (2, 30) mit einem Kern (4), der zwischen einer Vollwand (6) und einer porösen Wand (8) sandwichartig angeordnet ist, wobei der Kern mit den Wänden verbunden ist und Trennwände (12) umfaßt, die sich in Richtung der Dicke zwischen den zwei Wänden erstrecken und Zellen (10) bilden, die jeweils wenigstens eine Schallenergie abstrahlende Schicht (14) umfassen, wobei die abstrahlenden Schichten (14) von in gegenseitigem Kontakt stehenden hohlen sphärischen Kugeln (20) mit porösen Wänden gebildet sind, **dadurch gekennzeichnet, daß** die genannten Kugeln mikroperforierte Wände aufweisen und in Richtung der Dicke zwischen den zwei Wänden (6, 8) durch an den genannten Trennwänden befestigte Netze (22) in Position gehalten werden.

2. Platte nach Anspruch 1, **dadurch gekennzeichnet, daß** die poröse Wand (8) Perforierungen (28) aufweist, um die viskothermische Wirkung der Luft, die sie durchströmt, zu erhöhen.

3. Platte nach einem der Ansprüche 1 und 2, **dadurch gekennzeichnet, daß** die abstrahlenden Schichten (14) von einer Mischung aus Kugeln (20) mit homogenen Durchmessern gebildet sind.

4. Platte nach einem der Ansprüche 1 und 2, **dadurch gekennzeichnet, daß** die abstrahlenden Schichten (14) von einer Mischung aus Kugeln (20) mit zwischen 1 und 3,5 mm variierenden Durchmessern gebildet sind.

5. Platte nach irgendeinem der Ansprüche 1 bis 4, **dadurch gekennzeichnet, daß** die Schallenergie abstrahlenden Schichten (14) in einer gleichen Zelle (10) eine konstante Dicke aufweisen.

6. Platte nach irgendeinem der Ansprüche 1 bis 4, **dadurch gekennzeichnet, daß** die Schallenergie abstrahlenden Schichten (14) in einer gleichen Zelle (10) eine variable Dicke aufweisen.

7. Platte nach irgendeinem der Ansprüche 1 bis 6, **dadurch gekennzeichnet, daß** die Netze (22) die gleiche Zusammensetzung wie die Trennwände (12) haben, an denen sie befestigt sind.

8. Verfahren zur Herstellung einer schalldämmenden Platte nach irgendeinem der Ansprüche 1 bis 7, **dadurch gekennzeichnet, daß**:
- ein Kern (4) hergestellt wird, der Zellen (10) bildende Trennwände (12) umfaßt;
- für jede Zelle (10) des Kerns (4) ein unteres Netz (22a) an den genannten Trennwänden (12) positioniert und befestigt wird, an dem unteren Netz eine gewünschte Dicke von hohlen sphärischen Kugeln (20) mit porösen und mikroperforierten Wänden angeordnet wird, ein oberes Netz (22b) unter Aufbringen eines leichten Druckes auf den Kugeln positioniert wird und das obere Netz an den Trennwänden (12) befestigt wird;
- eine der Seiten des Kerns (4) an eine poröse Wand (8) angelegt und an dieser befestigt wird; und
- die andere Seite des Kerns an eine Vollwand (6) angelegt und an dieser befestigt wird.

9. Verfahren nach Anspruch 8, **dadurch gekennzeichnet, daß** die poröse Wand (8) Perforierungen (28) aufweist, um die viskothermische Wirkung der Luft, die sie durchströmt, zu erhöhen.

10. Verfahren nach einem der Ansprüche 8 und 9, **dadurch gekennzeichnet, daß** das obere und das untere Netz (22a, 22b) an den Trennwänden (12) angeschweißt sind und die Seiten des Kerns (4) an den Wänden (6, 8) angeschweißt sind.
